# EUROPÄISCHE PATENTSCHRIFT

(11) **EP 2 632 974 B1**
(45) Veröffentlichungstag und Bekanntmachung des Hinweises auf die Patenterteilung: **29.07.2015**
(21) Anmeldenummer: 11773436.8
(22) Anmeldetag: 11.10.2011
(51) Int. Cl.: C08J 7/00

(54) **SCHICHTSTOFF MIT EINER FARBSCHICHT UND VERFAHREN ZUR HERSTELLUNG DESSELBEN**
LAMINATE WITH A COLOR LAYER, AND METHOD FOR PRODUCING SAME
PRODUIT STRATIFIÉ MUNI D'UNE COUCHE COLORÉE ET PROCÉDÉ DE PRODUCTION DUDIT PRODUIT STRATIFIÉ

(30) Priorität: 25.10.2010 DE 102010042857
(43) Veröffentlichungstag der Anmeldung: 04.09.2013
(73) Patentinhaber: Evonik Röhm GmbH, 64293 Darmstadt (DE)
(72) Erfinder: PARUSEL, Markus, 64409 Messel (DE); SCHERBLE, Jonas, 64380 Roßdorf (DE); NEUHÄUSER, Achim, 55128 Mainz (DE); RICHTER, Ralf, 63457 Hanau/Großauheim (DE); DICKHAUT, Günther, 68305 Mannheim (DE)
(86) Internationale Anmeldenummer: PCT/EP2011/067668
(87) Internationale Veröffentlichungsnummer: WO 2012/055697

(56) Entgegenhaltungen:
- WO-A1-00/22032
- WO-A1-2004/085558
- DE-A1- 4 228 194
- US-B1- 6 207 224

## Beschreibung

Die vorliegende Erfindung betrifft einen Schichtstoff, umfassend mindestens ein thermoplastisches Substrat und mindestens eine Farbschicht. Weiterhin beschreibt die Erfindung ein Verfahren zur Herstellung dieses Schichtstoffs.

Schichtstoffe mit einer Farbschicht, insbesondere bedruckte Folien, werden vielfach zur Herstellung von dekorierten Kunststoffbauteilen mit besonderer Oberflächengüte eingesetzt. Im Allgemeinen wird die Farbschicht mit einer Verstärkungsschicht versehen, so dass ein dreischichtiger Aufbau erhalten wird, wobei die Farbschicht zwischen dem bedruckten Substrat und der Verstärkungsschicht angeordnet ist. Hierdurch werden sehr strapazierfähige Kunststoffbauteile erhalten, wobei die bedruckte Folie für die Strapazierfähigkeit entscheidend ist.

Allerdings sind bisher lediglich Substrate bekannt, die auf Polycarbonaten basieren. Die Strapazierfähigkeit von Polycarbonaten, die insbesondere auf der chemischen und mechanischen Beständigkeit sowie der Bewitterungsfestigkeit beruht, ist allerdings relativ begrenzt. So werden neuerdings, beispielsweise im Bereich der Kraftfahrzeuge, Chemikalienbeständigkeiten benötigt, die mit Polycarbonaten nicht mehr realisierbar sind. So kommen diese Kunststoffteile vielfach mit Ölen oder Öl-Wasser- bzw. Wasser-Öl-Emulsionen aus Kosmetika oder Lebensmitteln in Kontakt, die relativ aggressive Komponenten enthalten können. Daher werden hochwertige Kunststoffoberflächen für Kraftfahrzeuge Tests mit Sonnencreme, Sonnenöl oder Lotionen unterzogen, die in Kombination mit einer UV-Bestrahlung zu einer starken Beanspruchung der Oberflächen führen. Diese Tests zeigen, dass Polycarbonate beispielsweise leicht Spannungsrisse bilden und frühzeitig altern.

In Anbetracht des Standes der Technik ist es nun Aufgabe der vorliegenden Erfindung, Schichtstoffe, umfassend mindestens ein thermoplastisches Substrat und mindestens eine Farbschicht, zur Verfügung zu stellen, die ein hervorragendes Eigenschaftsprofil aufweisen. So sollte der Schichtstoff eine außergewöhnliche Strapazierfähigkeit aufweisen. Insbesondere sollte der Schichtstoff eine Chemikalienbeständigkeit zeigen, die sehr hohen Ansprüchen genügt, wie diese beispielsweise neuerdings im Bereich der Kraftfahrzeuge gefordert werden. So sollte der Schichtstoff insbesondere gegenüber Wasser-Öl- bzw. Öl-Wasser-Emulsionen wie Kosmetika, beispielsweise Sonnencreme eine hohe Beständigkeit aufweisen.

Weiterhin sollte der Schichtstoff gegenüber einer mechanischen Beanspruchung stabil sein und eine hohe Bewitterungsfestigkeit, eine hohe Haltbarkeit, insbesondere eine hohe Beständigkeit gegen UV-Bestrahlung aufweisen.

Darüber hinaus war es Aufgabe, einen Schichtstoff zur Verfügung zu stellen, der eine hohe optische Qualität insbesondere in Bezug auf Schlieren, Streifen, Gelkörper und andere Verunreinigungen zeigt.

Weiterhin sollte der Schichtstoff mit hoher und gleichbleibender Qualität kostengünstig herstellbar sein. Ferner war es eine Aufgabe der vorliegenden Erfindung einen Schichtstoff mit einer Farbschicht bereitzustellen, der einfach und ohne wesentliche Qualitätseinbußen umgeformt werden kann.

Darüber hinaus sollte ein bedruckter Schichtstoff mit einer Verstärkungsschicht versehen werden können, ohne dass die Qualität der Farbschicht in inakzeptabler Weise beeinträchtigt wird.

Gelöst werden diese sowie weitere nicht explizit genannte Aufgaben, die jedoch aus den hierin einleitend diskutierten Zusammenhängen oder der nachfolgenden Beschreibung ohne weiteres ableitbar oder erschließbar sind, durch einen Schichtstoff mit allen Merkmalen des Patentanspruchs 1. Zweckmäßige Abwandlungen des Schichtstoffs werden in Unteransprüchen unter Schutz gestellt.

Gegenstand der vorliegenden Erfindung ist dementsprechend ein Schichtstoff, umfassend mindestens ein thermoplastisches Substrat und mindestens eine Farbschicht, welcher dadurch gekennzeichnet ist, dass mindestens ein thermoplastisches Substrat Polyamid umfasst und eine Dicke im Bereich von 25 µm bis 5000 µm aufweist, auf das mindestens eine Farbschicht mit einer Polyurethan-Vernetzung aufgebracht ist. Der Schichtstoff der vorliegenden Erfindung zeigt ein außergewöhnlich gutes Eigenschaftsprofil. So weist der Schichtstoff eine ausgezeichnete Strapazierfähigkeit auf. Insbesondere zeigt der Schichtstoff eine Chemikalienbeständigkeit, die sehr hohen Ansprüchen genügt, wie diese beispielsweise neuerdings im Bereich der Kraftfahrzeuge gefordert werden. Ferner weist der Schichtstoff gegenüber Wasser-Öl- bzw. Öl-Wasser-Emulsionen wie Kosmetika, beispielsweise Sonnencreme eine überraschend hohe Beständigkeit auf.

Weiterhin ist der Schichtstoff gegenüber einer mechanischen Beanspruchung stabil und weist eine hohe Bewitterungsfestigkeit, eine hohe Haltbarkeit, insbesondere eine hohe Beständigkeit gegen UV-Bestrahlung auf.

Darüber hinaus zeigt ein erfindungsgemäßer Schichtstoff eine hohe optische Qualität insbesondere in Bezug auf Schlieren, Streifen, Gelkörper und andere Verunreinigungen.

Weiterhin kann ein Schichtstoff der vorliegenden Erfindung mit hoher und gleichbleibender Qualität kostengünstig hergestellt werden.

Ferner kann ein erfindungsgemäßer Schichtstoff mit einer Farbschicht einfach und ohne wesentliche Qualitätseinbußen umgeformt werden.

Darüber hinaus kann ein bedruckter Schichtstoff mit einer Verstärkungsschicht versehen werden, ohne dass die Qualität der Farbschicht in inakzeptabler Weise beeinträchtigt wird.

Die vorliegende Erfindung stellt einen Schichtstoff bereit. Der Begriff Schichtstoff beschreibt im Wesentlichen ein Gebilde, dessen Dicke wesentlich geringer ist als dessen Ausdehnung in der Länge oder Breite. Demgemäß fallen unter diesen Begriff Folien und dünne Formkörper.

Der Schichtstoff umfasst mindestens ein thermoplastisches Substrat und mindestens eine Farbschicht. Das thermoplastische Substrat umfasst Polyamid.

Polyamide im Sinne der vorliegenden Erfindung sind thermoplastische Polymere, deren Wiederholungseinheiten über eine Amidgruppe (-CO-NH-) verbunden sind. Überraschende Vorteile zeigen Polyamide, die im Wesentlichen aus aromatischen, aliphatischen oder cycloaliphatischen Dicarbonsäuren und cycloaliphatischen Diaminen hergestellt wurden. Alternativ kann es sich auch um Polyamide des AB-Typs, herstellbar aus Aminocarbonsäuren handeln. Bevorzugt sind aber Polyamide des AA/BB-Typs aus Dicarbonsäuren und Diaminen einsetzbar. Insbesondere kann es sich bei den Polyamiden um PA PACM12 oder um PA MACM12 handeln. Weiterhin kann PA11 oder PA12 eingesetzt werden, wobei auf die übliche Nomenklatur verwiesen wird.

Die erfindungsgemäß einsetzbaren Polyamide und damit die hergestellten Substrate, insbesondere Polyamidformkörper bzw. Polyamidfolien werden bevorzugt durch Polykondensation im Wesentlichen aus aromatischen, cycloaliphatischen oder aliphatischen Dicarbonsäuren, bevorzugt aus aromatischen oder aliphatischen Dicarconsäuren und cycloaliphatischen Diaminen hergestellt. Im Wesentlichen bedeutet, dass bis zu 40 Gew.%, bevorzugt zu maximal 10 Gew.%, besonders bevorzugt keine weiteren Komponenten wie Aminoundecansäure, monofunktionelle Bausteine oder weitere Dicarbonsäuren und/oder Diamine eingebaut sein können. Alternativ kann es sich auch um Polyamide des AB-Typs, herstellbar aus Aminocarbonsäuren handeln. Bevorzugt sind aber Polyamide des AA/BB-Typs, aus Dicarbonsäuren und Diaminen herstellbar.

Bei den verwendeten cycloaliphatischen oder aliphatischen Dicarbonsäuren handelt es sich um cycloaliphatische, teilweise cyclischaliphatische, lineare oder verzweigte Dicarbonsäuren mit 4 bis 20, bevorzugt mit 8 bis 16 Kohlenstoffatomen. Besonders bevorzugt handelt es sich um eine Dicarbonsäure mit 12 Kohlenstoffatomen, ganz besonders bevorzugt um Dodecandisäure (Formel 1):

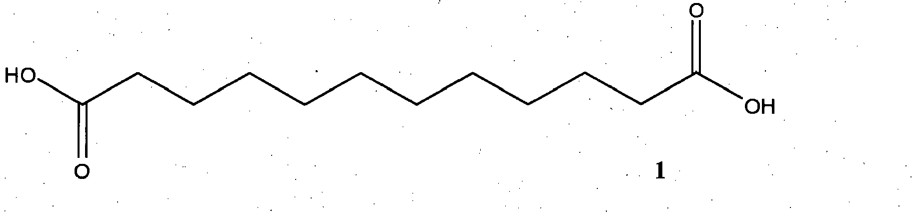

Bei den verwendeten aromatischen Dicarbonsäuren handelt es sich um Dicarbonsäuren mit einem oder mehreren aromatischen Ringen. Beispiele sind Phthalsäure, Isophthalsäure oder Terephthalsäure.

Bei den cycloaliphatischen Diaminen handelt es sich um aliphatische Diamine, die ein bis drei aliphatische Ringe aus 5 bis 8, bevorzugt 6 Kohlenstoffen aufweisen. Bevorzugt handelt es sich um Diaminodicyclohexylmethan (Formel 2) oder um 3,3-Dimethyl-p-diaminocyclohexylmethan (Formel 3):

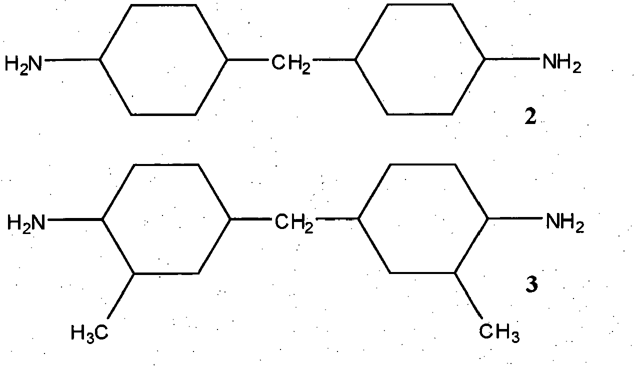

Gemäß einem bevorzugten Aspekt kann ein Polyamid eingesetzt werden, welches im Wesentlichen aus einer aliphatischen oder cycloaliphatischen Dicarbonsäure und einem cycloaliphatischen Diamin hergestellt wurde und einen Endgruppenanteil kleiner 170 mmol/kg, bevorzugt kleiner 100 minol/kg aufweist. Besonders bevorzugt ist der Carboxyl- und/oder der Aminoendgruppenanteil, bevorzugt der Aminoendgruppenanteil kleiner als 100 mmol/kg, besonders bevorzugt kleiner als 35 mmol/kg.

In einer besonderen Ausführungsform bevorzugt handelt es sich bei dem Polyamid, welches im Substrat enthalten ist, um PA PACM12 oder um PA MACM12. Diese Polyamide können, insbesondere in Form vom Formmassen von der Firma Evonik Degussa GmbH unter der Handelsbezeichnung TROGAMID^{®} erhalten werden, wobei zu diesen Polyamiden beispielsweise TROGAMID^{®} CX7323 zählt.

In einer anderen bevorzugten Ausführungsform handelt es sich um Polyamide auf Basis aromatischer Dicarbonsäuren.

Neben Polyamid kann das Substrat weitere Additive, Prozesshilfsmittel zur Folienherstellung oder weitere Kunststoffe enthalten. Hierzu gehören unter anderem Stabilisatoren, Weichmacher, Füllstoffe wie Fasern und Farbstoffe. Im Allgemeinen beträgt jedoch der Polyamidanteil in dem Substrat mindestens 50 Gew.-%, vorzugsweise mindestens 80 Gew.-% und besonders bevorzugt mindestens 90 Gew.-%, ohne dass hierdurch eine Beschränkung erfolgen soll.

Das Substrat mit Polyamid ist, wie der Schichtstoff, ein Formkörper, dessen Dicke wesentlich geringer ist als die Ausdehnung in der Länge oder Breite, so dass das Polyamid umfassende Substrat im Allgemeinen ein extrudiertes Halbzeug darstellt. Demgemäß kann das Substrat vorzugsweise in Form einer Folie vorliegen, wobei hierdurch keine Wickelbarkeit des Substrats impliziert werden soll.

Das mit einer Farbschicht zu versehende Substrat liegt in einer Dicke von 25 bis 5000 µm vor. Bevorzugt liegt die Dicke in einem Bereich von 50 bis 2000 µm, besonders bevorzugt von 100 bis 1000 µm. Die zur Beschichtung vorgesehene sowie die andere Seite des Substrats können glatt sein oder eine Oberflächenstruktur aufweisen, wobei eine matte Oberfläche der zu beschichtenden Seite bevorzugt ist. Aus ästhetischen Gründen kann eine glatte Oberfläche der nicht beschichteten Seite des Substrats bevorzugt sein. Die als Substrate eingesetzten Polyamid-haltigen Formkörper oder Folien können alternativ zu einer unbehandelten, transparenten und klaren Folie bzw. einem entsprechenden Formkörper auch während des Extrusionsprozesses modifiziert werden. So können die Folien oder Formkörper durch Zugabe von Farbmitteln wie Pigmenten und/oder Farbstoffen eingefärbt werden. Zusätzlich können durch Zugabe geeigneter Additive die Kratzfestigkeit, IR- bzw. UV-Absorption oder die Haptik verbessert bzw. beeinflusst werden. Durch Zugabe von Mikropartikeln kann auch die Lichtstreuung verändert werden. Kratzfestigkeit, Antischmutzverhalten, Antisoiling oder eine veränderte Haptik können auch durch entsprechende Beschichtungen bewirkt werden. Im Weiteren kann der Ausdruck Polyamidformkörper auch synonym für Polyamidfolien stehen.

Zusätzlich zum Substrat umfasst ein erfindungsgemäßer Schichtstoff mindestens eine Farbschicht, die eine Polyurethan-Vernetzung aufweist. Demgemäß umfasst die Farbschicht ein Bindemittel, welches über Isocyanate vernetzt werden kann.

Das zur Erzeugung der Farbschicht eingesetzte Beschichtungsmittel kann beispielsweise eine Druckfarbe sein, die im getrockneten/gehärteten Zustand gummielastisch ist und daher beim Verformen ohne Rissbildung oder Verschlechterung der optischen Eigenschaften mit der Folie verformt werden kann. Als Bindemittel kann die Farbe daher vorzugsweise eine Cellulose oder ein Cellulosederivat, beispielsweise Nitrocellulose, ein Polyurethan, einen Polyester, ein Polycarbonat, ein Polyamid oder ein Poly(meth)acrylat enthalten. Diese Polymere können einzeln oder als Mischung eingesetzt werden.

Vorzugsweise kann das in der Farbe eingesetzte Bindemittel ein Gewichtsmittel des Molekulargewichts im Bereich von 1000 bis 50000 g/mol, besonders bevorzugt im Bereich von 2000 bis 20000 g/mol aufweisen. Das Zahlenmittel des Molekulargewichts des eingesetzten Bindemittels liegt vorzugsweise im Bereich von 1000 bis 50000 g/mol, besonders bevorzugt im Bereich von 2000 bis 20000 g/mol. Das zahlengemittelte und das gewichtsgemittelte Molekulargewicht können durch bekannte Verfahren, beispielsweise die Gelpermeationschromatographie (GPC), vorzugsweise unter Verwendung eines PMMA-Standards, bestimmt werden.

Die zur Härtung notwendige Funktionalität des in der Farbe enthaltenen Bindemittels wird über Hydroxygruppen erzielt, die mit Isocyanaten oder Isocyanat-Derivaten zu Polyurethanen vernetzt werden können. Überraschende Vorteile lassen sich insbesondere mit Bindemitteln erzielen, die vor der Vernetzung eine Hydroxylzahl im Bereich von 0,1 bis 50 mg KOH/g, besonders bevorzugt 0,5 bis 30 mg KOH/g aufweisen. Die Hydroxylzahl kann beispielsweise gemäß DIN EN ISO 4629 bestimmt werden.

Zusätzlich zum Bindemittel, welches eine Polyurethan-Vernetzung aufweist, umfasst die Farbschicht mindestens ein Farbmittel. Ein Farbmittel ist nach DIN 55943 die Sammelbezeichnung für alle farbgebenden Stoffe. Zu den farbgebenden Stoffen gehören unter anderem lösliche Farbstoffe und anorganische oder organische Pigmente. Diese Farbmittel können einzeln oder als Mischung von zwei oder mehreren eingesetzt werden. So können insbesondere Mischungen organischer Farbpigmente mit löslichen organischen Farbstoffen eingesetzt werden. Weiterhin können Mischungen eingesetzt werden, die anorganische und organische Farbpigmente umfassen. Darüber hinaus können Mischungen verwendet werden, die zusätzlich zu den anorganischen Farbpigmenten lösliche organische Farbstoffe enthalten. Weiterhin sind Mischungen zweckmäßig, die lösliche Farbstoffe und anorganische und organische Pigmente umfassen. Die zuvor dargelegten Farbmittel sind unter anderem in Kirk, Othmer Encyclopedia of Chemical Technology, Third Edition, vol. 19, pp. 1 bis 78 und in Ullmann's Encyclopedia of Industrial Chemistry 5. Auflage auf CD-ROM dargelegt.

Die Art des Farbmittels hängt von der Verarbeitung des Schichtstoffes ab, wobei eine hohe Temperaturstabilität erforderlich sein kann. Demgemäß können vorzugsweise sehr temperaturstabile Pigmente eingesetzt werden, so dass sich dieselben durch die bei einer Verarbeitung möglicherweise entstehende Temperatur beim Hinterspritzen nicht zersetzen, sublimieren oder den Farbton verändern.

Bei den Pigmenten, die in der Farbschicht vorzugsweise enthalten sind, kann es sich um beliebige Pigmente handeln. Verwendet werden können z.B., ohne darauf beschränkt zu sein, Titandioxid, Zinksulfid, Pigmentruss, Azodiarylgelb, Isoindolgelb, Diarylidorange, Chinacridonmagenta, Diketopyrrolorot, Kupferphthalocyaninblau, Küpferphthalo-cyaningrün, Dioxazinviolett und Diketometalloxid.

Eine ziemlich umfassende Auflistung weiterer einsetzbarer Pigmente ist im Colour Index International, Fourth Edition Online, 2001, veröffentlicht von der Society of Dyers and Colourists in Verbindung mit der American Association of Textile Chemists and Colorists zu finden.

Es können auch Effektpigmente wie, ohne darauf beschränkt zu sein, Metalloxid-beschichtete Glimmer und Metallicpigmente, eingesetzt werden. Die Menge an Buntpigment beträgt gewöhnlich 1 bis 50 Gew.%, bevorzugt 3 bis 45 Gew.%, bezogen auf das Gewicht der Druckfarbe, abhängig von der Art des Pigments, der gewünschten Deckkraft und vom gewählten Druckverfahren.

Weißpigment wird gewöhnlich in einer Menge von 20 bis 50 Gew.%, bevorzugt 25 bis 45 Gew.%, eingesetzt. Die Buntpigmente werden vielfach in einer Menge von 1 bis 20 Gew.%, abhängig von der Art und des Farbtons sowie des verwendeten Druckverfahrens, eingesetzt. Metalloxid-beschichtete Glimmer und Metallicpigmente, werden vielfach in einer Menge von 1 bis 20 Gew.%, abhängig von der Art und des Farbtons sowie des verwendeten Druckverfahrens, eingesetzt.

Auf der Farbschicht kann gemäß einem bevorzugten Aspekt der vorliegenden Erfindung eine Haftvermittlerschicht vorgesehen sein. Die Haftvermittlerschicht ist im Allgemeinen auf das in der Farbschicht eingesetzte Bindemittel und die auf die Haftvermittlerschicht aufzubringende Verstärkungsschicht abgestimmt. Vorzugsweise umfasst die Haftvermittlerschicht eine Cellulose oder ein Cellulosederivat, beispielsweise Nitrocellulose, ein Polyurethan, einen Polyester, ein Polycarbonat, ein Polyamid oder ein Poly(meth)acrylat. Diese Polymere können einzeln oder als Mischung eingesetzt werden.

Gemäß einer bevorzugten Ausführungsform kann ein erfindungsgemäßer Schichtstoff eine Verstärkungsschicht aufweisen, wobei die Farbschicht zwischen dem thermoplastischen Substrat und der Verstärkungsschicht vorgesehen ist. Die zur Herstellung der dargelegten Verstärkungsschicht einsetzbaren Formmassen und/oder Folien können insbesondere thermoplastische Polymeren umfassen. Zu den bevorzugten Kunststoffen gehören unter anderem Cellulose oder Cellulosederivate, Polystyrole, Polystyrol-Copolymere, wie zum Beispiel ABS, Polyurethane, Polyester, Polycarbonate, Polyamide, Polyolefine, insbesondere Polyethylen oder Polypropylen, Polyvinylchloride, Poly(N-Methylmethacrylimide) (PMMI) und/oder Polymethylmethacrylate (PMMA). Diese Polymere können einzeln oder als Mischung eingesetzt werden. Weiterhin kann die Verstärkungsschicht Füllstoffe, insbesondere Fasern aufweisen.

Das zur Herstellung des vorliegenden Schichtstoffes einzusetzende Substrat kann vorzugsweise durch Extrusionsverfahren, insbesondere zur Herstellung von Halbzeug erhalten werden, wobei diese Verfahren auch Folienextrusionsverfahren einschließen.

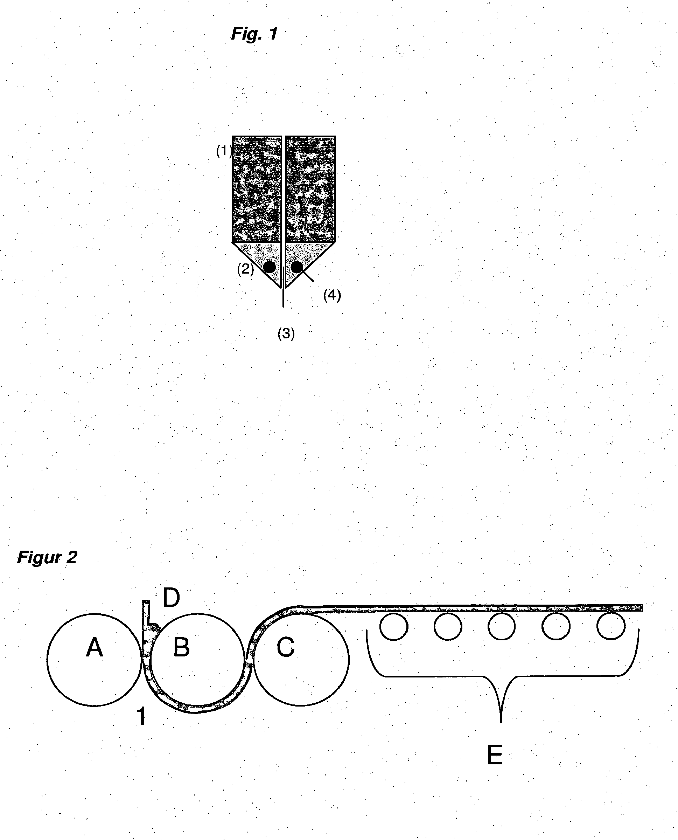

Vorzugsweise kann ein Extruder mit einer temperierbaren Düse eingesetzt werden, wie dieser beispielhaft in Figur 1 dargestellt ist, wobei dieser Extruder einen Düsenkörper (1) mit einer Düsenlippe (2) und einem Lippenspalt (3) umfasst. Die Düsenlippe (2) ist mit einer Temperierung (4) versehen.

Gemäß einer besonderen Ausgestaltung des Extrusionsverfahrens kann zumindest ein Bereich der Föliendüse, bevorzugt die Düsenlippe (2) eine um 10 °C bis 100 °C, bevorzugt um 20 °C bis 80 °C, besonders bevorzugt 30 °C bis 70 °C höhere Temperatur aufweisen als der Düsenkörper (1). Insbesondere bevorzugt ist, dass die Temperatur der Düsenlippe (2) zwischen 10 °C und 100 °C bevorzugt um 20 °C bis 80 °C, besonders bevorzugt 30 °C bis 70 °C höher ist, als die Temperatur des Düsenkörpers (1), und dass der Düsenkörper (1) eine um maximal 5 °C höhere, bevorzugt die gleiche Temperatur aufweist wie der Extruder.

Gemäß einer besonderen Variante des Verfahrens kann der Düsenkörper (1) in der Regel eine Temperatur zwischen 250 °C und 330 °C aufweisen. Die Düsenlippe (2) kann gleichzeitig eine Temperatur zwischen 290 °C und 370 °C haben. Bevorzugt weist die Düsenlippe (2) eine zusätzliche Temperierung (4) auf. Die Temperierung kann beispielsweise über eingesteckte Heizpatronen bzw. Flachheizkörper realisiert werden. Diese können u.a. elektrisch oder über ein temperiertes Medium wie beispielsweise Öl beheizt werden. Die Temperatur kann beispielsweise über Thermoelemente, Widerstandsthermometer oder berührungslose Temperaturmessverfahren wie IR-Thermometer bestimmt werden.

Die angegebenen Temperaturen werden an der Innenwand oder möglichst nah an der Innenwand des Extruderzylinders, an der Innenwand des Düsenkörpers oder möglichst nah an der Innenwand des Düsenkörpers und an der Innenwand der Düsenlippe oder möglichst nah an der Innenwand der Düsenlippe gemessen.

Im Bereich innerhalb des Extrusionswerkzeugs bzw. der Foliendüse vor dem Düsenausgang muss der Schmelzedruck hoch genug sein, um die noch im Polymeren gelösten volatilen Bestandteile, wie Wasser oder gegebenenfalls Monomere vollständig in Lösung zu halten und das Entstehen von Gasblasen somit zu verhindern. Dies kann beispielsweise über die Geometrie des Extrusionswerkzeugs, den Gehalt der verwendeten Formmasse an Restfeuchtigkeit, den Volumenstrom an Schmelze und die Verarbeitungstemperaturen sichergestellt werden.

Insbesondere kann ein bevorzugtes Verfahren zur Herstellung des Substrats in folgenden Prozessschritten durchgeführt werden:
- Die Formmasse kann bei einer Temperatur zwischen 250 °C und 330 °C in einem Extruder aufgeschmolzen werden.
- Die Formmasse kann über eine Düsenlippe (2), die eine Temperatur zwischen 290 und 370 °C aufweis,t, aus dem Extruder austreten.
- Die Formmasse kann in einer Dicke zwischen 10 µm und 10 mm über mindestens eine Walze oder mindestens ein Band abgezogen werden.
- Die Formmasse kann weitergefördert und dabei abgekühlt werden.

Als Extruder können alle zur Verarbeitung von Polyamiden geeigneten Ein-, Zwei- oder Multischneckenextruder verwendet werden. Diese Extruder können mit oder ohne, bevorzugt ohne, Entgasungsstellen ausgelegt sein. Die Extruder können im Bereich des Extruderzylinders mehrere Temperaturzonen oder eine einheitliche Temperatur haben.

Zusätzlich bevorzugt hat die Polyamidformmasse einen maximalen Wassergehalt von 0,1 Gew.%, bevorzugt von 0,02 Gew.%. Durch den geringen Wassergehalt wird die optische Qualität, insbesondere in Bezug auf eine zu verhindernde Blasenbildung und/oder Trübung verbessert.

Nach dem Verlassen des Extruders wird die Formmasse abgekühlt. Das Abkühlverfahren wird üblich den Anforderungen an den Schichtstoff angepasst.

Dünne Schichtstoffe, beispielsweise Folien mit einer Dicke von höchstens 250µm, vorzugsweise höchstens 100 µm können unter anderem mit dem Chill-Roll-Verfahren hergestellt werden, wobei die Schmelzebahn auf eine Kühlwalze abgelegt wird, so dass die andere Folienseite in diesem Moment keinen Walzenkontakt hat, d.h. es gibt keine Gegenwalze bzw. einen Glättspalt.
Zur Herstellung von dickeren Schichtstoffen, die beispielsweise eine Dicke von mindestens 50 µm, vorzugsweise mindestens 100 µm aufweisen können, sind unter anderem Glättverfahren bevorzugt, ohne dass hierdurch eine Beschränkung erfolgen soll. Das Glättverfahren ermöglicht eine besonders gute Dickenverteilung der Folien über Extrusionsbreite und besonders gute Oberflächenqualitäten, die wiederum in Abhängigkeit von der Güte der Walzenoberfläche stehen.

Beim Glättverfahren wird die aus der Düse, vorzugsweise Breitschlitzdüse, austretende, plastifizierte Kunststoffmasse einem Glättwerk zugeführt, wobei das Glättwerk mehrere nacheinander geschaltete rotierende Walzen umfasst, um die die Kunststoffmasse herumführbar ist, wobei mindestens zwei Walzen so angeordnet sind, dass zwischen diesen benachbartem Walzenpaar ein Spalt einstellbar ist, mittels dem die Dicke der Kunststoffmasse beeinflusst werden kann. Insbesondere zur Darstellung von Folien mit besonders guter Dickenverteilung über Extrusionsbreite, wird im ersten Walzenspalt, der sich direkt an den Schmelzeaustritt aus der Düse anschließt, die Einstellung der Extrusionsbedingungen so gewählt, dass sich ein Schmelzevorrat / Wulst bildet, mit dem sich feinste Dickenunterschiede in der Folie ortsabhängig ausgleichen lassen. Ganz allgemein kann die Anzahl, Anordnung und Lage der Walzen sowie die Anzahl benachbarter Walzenpaare, über die ein formgebender Spalt einstellbar ist, unterschiedlich ausgeführt sein, ohne dass hierdurch eine Beschränkung erfolgen soll. So sind unter anderem I-, F-, L- und Z-Anordnungen von Walzen des Glättwerks bekannt, wobei bei einer I-Anordnung alle Walzen in einer Linie angeordnet sind. Bei den anderen Anordnungen ist mindestens eine Walze außerhalb einer Linie angeordnet.

Vorzugsweise kann ein Glättwerk mit mindestens drei Walzen A, Bund C eingesetzt werden, wobei die Schmelze zunächst auf einen Spalt 1 zwischen den Walzen A und B aufgegeben werden kann, so dass ein Schmelzevorrat D im Spalt 1 gebildet wird, wie dies in Figur 2 beispielhaft dargelegt ist. Die Walzenanordnung des Glättwerkes in Figur 2 entspricht hierbei der I-Konfiguration in horizontaler Lage. Dem Glättwerk, umfassend drei Walzen A, B und C, kann eine Kühlstrecke (E) nachgeschaltet sein, die der Folie die Restwärme entziehen kann.

Vor dem Aufbringen der Farbe, die auch als Druckfarbe bezeichnet werden kann, kann das Substrat, beispielsweise eine Folie gegebenenfalls vorbehandelt werden. Übliche Vorbehandlungen umfassen die Reinigung mit Lösemitteln oder wässerigen Reinigungsmitteln, die Aktivierung mittels Beflammen, UV-Bestrahlung, Corona-, Plasmabehandlung oder die Behandlung mit ionisierter Gas wie z. B. ionisierter Luft, um Staubeinfall zu reduzieren.

Der erfindungsgemäße Schichtstoff umfasst eine Farbschicht, die durch das Aufbringen von Farbe erhalten werden kann. Neben den zuvor dargelegten Komponenten, insbesondere dem Farbmittel und dem Bindemittel, umfasst die Farbe mindestens ein Härtungsmittel oder Vernetzungsmittel, welches eine Polyurethan-Vernetzung bewirken kann.

Zu den bevorzugten Vernetzungsmitteln gehören insbesondere Polyisocyanate oder Verbindungen, die Polyisocyanate freisetzen. Polyisocyanate sind Verbindungen mit mindestens 2 Isocyanat-Gruppen.

Die erfindungsgemäß einsetzbaren Polyisocyanate können beliebige aromatische, aliphatische und/oder cycloaliphatische Polyisocyanate umfassen.

Zu den bevorzugten aromatischen Polyisocyanaten gehören 1,3- und 1,4-Phenylendiisocyanat, 1,5-Naphthylendiisocyanat, Toluidindiisocyanat, 2,6-Toluylendiisocyanat, 2,4-Toluylendiisocyanat (2,4-TDI), 2,4'-Diphenylmethandiisocyanat (2,4'-MDI), 4,4'-Diphenylmethandiisocyanat, die Mischungen aus monomeren Diphenylmethandiisocyanaten (MDI) und oligomeren Diphenylmethandiisocyanaten (Polymer-MDI), Xylylendiisocyanat, Tetramethylxylylen-diisocyanat und Triisocyanatotoluol.

Bevorzugte aliphatische Polyisocyanate besitzen 3 bis 16 Kohlenstoffatome, vorzugsweise 4 bis 12 Kohlenstoffatome, im linearen oder verzweigten Alkylenrest und geeignete cycloaliphatische oder (cyclo)aliphatische Diisocyanate vorteilhafterweise 4 bis 18 Kohlenstoffatome, vorzugsweise 6 bis 15 Kohlenstoffatome, im Cycloalkylenrest. Unter (cyclo)aliphatischen Diisocyanaten versteht der Fachmann hinlänglich gleichzeitig cyclisch und aliphatisch gebundene NCO-Gruppen, wie es z. B. beim Isophorondiisocyanat der Fall ist. Demgegenüber versteht man unter cycloaliphatischen Diisocyanaten solche, die nur direkt am cycloaliphatischen Ring gebundene NCO-Gruppen aufweisen, z. B. H₁₂MDI. Beispiele sind Cyclohexandiisocyanat, Methylcyclohexandiisocyanat, Ethylcyclohexandiisocyanat, Propylcyclohexandiisocyanat, Methyldiethylcyclo-hexandiisocyanat, Propandiisocyanat, Butandiisocyanat, Pentandiisocyanat, Hexandiisocyanat, Heptandiisocyanat, Octandiisocyanat, Nonandiisocyanat, Nonantriisocyanat, wie 4-Isocyanatomethyl-1,8-octandiisocyanat (TIN), Dekandi- und triisocyanat, Undekandi- und -triisocyanat, Dodecandi- und - triisocyanate.

Bevorzugt werden Isophorondiisocyanat (IPDI), Hexamethylendiisocyanat (HDI), Diisocyanatodicyclohexylmethan (H₁₂MDI), 2-Methylpentandiisocyanat (MPDI), 2,2,4-Trimethylhexamethylendiisocyanat/2,4,4-Trimethylhexa-methylendiisocyanat (TMDI), Norbornandiisocyanat (NBDI). Ganz besonders bevorzugt werden IPDI, HDI, TMDI und H₁₂MDI eingesetzt, wobei auch die Isocyanurate einsetzbar sind.

Ebenfalls geeignet sind 4-Methyl-cyclohexan-1,3-diisocyanat, 2-Butyl-2-ethylpentamethylen-diisocyanat, 3(4)-Isocyanatomethyl-1-methylcyclohexyl-isocyanat, 2-Isocyanatopropylcyclohexylisocyanat, 2,4'-Methylen-bis(cyclohexyl)diisocyanat, 1,4-Diisocyanato-4-methyl-pentan.

Bevorzugte aliphatische, cycloaliphatische und araliphatische, d. h. arylsubstituierte aliphatische Diisocyanate werden beispielsweise im Houben-Weyl, Methoden der organischen Chemie, Band 14/2, Seiten 61 - 70 und im Artikel von W. Siefken, Justus Liebigs Annalen der Chemie 562, Seiten 75 - 136 beschrieben.

Selbstverständlich können auch Gemische der Polyisocyanate eingesetzt werden.

Weiterhin werden vorzugsweise Oligo- oder Polyisocyanate verwendet, die sich aus den genannte Di- oder Polyisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen herstellen lassen. Diese bevorzugten Klassen von Polyisocyanaten können durch Dimerisierung, Trimerisierung, Allophanatisierung, Biuretisierung und/oder Urethanisierung von einfachen Diisocyanaten hergestellt werden. Zu diesen Verbindungen mit mehr als zwei Isocyanatgruppen pro Molekül zählen beispielsweise die Umsetzungsprodukte von einfachen Diisocyanate, wie z. B. IPDI, TMDI, HDI und/oder H₁₂MDI mit mehrwertigen Alkoholen (z. B. Glycerin, Trimethylolpropan, Pentaerythrit) bzw. mehrwertigen Polyaminen, oder Triisocyanurate, die durch Trimerisierung von einfachen Diisocyanaten, wie beispielsweise IPDI, HDI und H₁₂MDI, erhalten werden, wobei HDI-Biuret besonders bevorzugt ist.

Von besonderem Interesse sind mithin Farben, die vorzugsweise 0,5 bis 20 Gew.-%, besonders bevorzugt 2 bis 10 Gew.-% Vernetzungsmittel enthalten, bezogen auf das Gesamtgewicht der Farbe.

Bei Verwendung von Polyisocyanaten als Vernetzungsmittel kann die Umsetzung der im Bindemittel enthaltenen Hydroxygruppen mit den organischen Polyisocyanaten hierbei, je nach den Verwendungszweck der Umsetzungsprodukte, mit 0,5 bis 1,1 NCO-Gruppe pro Hydroxygruppe durchgeführt werden. Die Umsetzung wird bevorzugt so durchgeführt, dass die Mengen des organischen Polyisocyanates, bezogen auf den Gesamthydroxygehalt der im Reaktionsgemisch vorliegenden Komponenten pro Hydroxygruppe, in einer Menge von 0,7 bis 1,0 Isocyanatgruppen vorhanden sind.

Die Farbe kann weitere übliche Lösungsmittel, Zusatzstoffe und/oder Verarbeitungshilfsmittel enthalten, wobei diese Komponenten üblich auf die Drucktechnologie und Anwendungserfordernisse abgestimmt werden.

So werden übliche Lösungsmittel, Zusatzstoffe und/oder Verarbeitungshilfsmittel in EP 0 688 839 B1 dargelegt, wobei diese Lösungsmittel, Zusatzstoffe, Verarbeitungshilfsmittel usw. zu Zwecken der Offenbarung in diese Anmeldung eingefügt werden.

Die weiteren Eigenschaften der Farbe ist vom Auftragverfahren abhängig, wobei diese Eigenschaften unter anderem in Kipphan, Handbuch der Printmedien, Springer-Verlag, Berlin, 2000, ISBN-10 3540669418 dargelegt werden, wobei diese Eigenschaften zu Zwecken der Offenbarung in diese Anmeldung eingefügt werden.

Besonders geeignete Druckfarben sind beispielsweise von der Firma Pröll KG, Weißenburg in Bayern, DE, unter der Bezeichnung NoriAmid® erhältlich.

Die zuvor dargelegte Farbe kann mit bekannten Verfahren, vorzugsweise Druckverfahren auf das Substrat aufgebracht werden. Geeignete Druckverfahren zur Aufbringung von Druckfarbenschichten sind bekannt, prinzipiell sind alle Druckverfahren wie Hochdruck, Tiefdruck, Flexodruck, Offsetdruck, Siebdruck, Tampondruck, Digitaldruck, insbesondere Tintenstrahldruck und Laserdruck geeignet. Bevorzugt sind Tiefdruck, Flexodruck und Siebdruck, wobei Siebdruck besonders bevorzugt ist. Im Hinblick auf Siebdruck ist der Flachbettsiebdruck bevorzugt. Diese Druckverfahren werden unter anderem in Kipphan, Handbuch der Printmedien, Springer-Verlag, Berlin, 2000, ISBN-10 3540669418 dargelegt, wobei diese Verfahren zu Zwecken der Offenbarung in diese Anmeldung eingefügt werden.

Im Anschluss an die Bedruckung wird die Beschichtung durch übliche Verfahren gehärtet und, bei Verwendung von Lösungsmitteln, getrocknet. Die Härtungs- oder Trocknungszeit kann, je nach Art und Menge des Lösungsmittels und des Vernetzungsgrades variieren. Vorzugsweise wird die Härtungs- oder Trocknungszeit so gewählt, dass die Farbschicht eine für ein mögliches Umformungsverfahren ausreichende Elastizität behält, jedoch so stark vernetzt ist, dass die Farbschicht eine für eine mögliche Umformung und Weiterhandlung ausreichende Festigkeit besitzt. Eine Trocknungs- oder Härtungszeit von mindestens 5 Minuten, besonders bevorzugt mindestens 10 Minuten und ganz besonders bevorzugt mindestens 20 Minuten bei Temperaturen von ca. 50°C oder, je nach Trockner, 90°C führt vielfach zu einer ausreichend hohen Stabilität der Farbschicht. Aus den genannten Gründen sollte die Trocknungszeit nicht zu lang dauern, da andernfalls eine Sprödigkeit der Farbschicht auftreten kann, die eine Umformung erschwert. Hierbei ist die Härtung von der Temperatur abhängig. Bei 50°C können daher überraschende Vorteile erzielt werden, falls die Trocknungszeit höchstens 20 Stunden, vorzugsweise höchstens 10 Stunden beträgt. Eine höhere Temperatur kann den Trocknungsvorgang beschleunigen, so dass bei 90°C die Trocknungszeit vorzugsweise höchstens 5 Stunden, bevorzugt höchstens 4 Stunden beträgt.

Falls eine Haftvermittlerschicht auf das mit einer Farbe versehene Substrat aufgebracht wird, kann die Haftvermittlerschicht zusammen mit der Farbe getrocknet werden, wobei die Härtung der Farbe während der Trocknung der Haftvermittlerschicht erfolgen kann. Die Haftvermittlerschicht kann mit den gleichen Verfahren wie die Farbschicht auf das Substrat aufgetragen werden, wobei die Farbschicht und die Haftvermittlerschicht besonders bevorzugt durch Siebdruck, insbesondere Flachbettsiebdruck aufgedruckt werden.

Erfindungsgemäß hergestellte bedruckte Schichtstoffe, vorzugsweise Polyamidfolien, besonders bevorzugt flexible Polyamidfolien können u. a. zur Laminierung auf Formmassen, Holz, Glas oder Metallen, bevorzugt Formmassen verwendet werden.

Die Laminierung kann beispielsweise durch Verkleben auf einer Oberfläche des Schichtstoffs erfolgen, wobei die Laminierung auf die bedruckte oder die unbedruckte Seite erfolgen kann. Darüber hinaus ist auch die Heißlaminierung der Folie auf eine andere Folie oder auf eine Platte möglich. Die erfindungsgemäßen Folien können auch mit einer oder mehreren Trägerfolien laminiert werden.

Das mit einer vernetzten Farbschicht versehene Substrat kann durch bekannte Verfahren umgeformt werden, wobei die Art des Umformungsverfahrens sowie die Verfahrensparameter vom Anwendungszweck und den Eigenschaften des Schichtstoffes abhängig sind. Überraschend kann der erfindungsgemäße Schichtstoff durch Tiefziehen, Thermoformen oder Hochdruckverformung in eine Form gebracht werden.

Als Anhaltspunkt können, beispielsweise für eine Verformungstiefe bis 1,2 mm bei einer Folienstärke von 250 µm, folgende Parameter eingestellt werden:
Ober- und Unterhitze: 270 bis 300°C, vorzugsweise 280 bis 290°C;
Heizzeit 5 bis 15 Sekunden, vorzugsweise 8 bis 10 Sekunden;
Luftheizung 280 bis 340, vorzugsweise 300 bis 320 °C;
Werkzeugheizung 90 bis 130°C, vorzugsweise 100 bis 110°C;
Hochdruck ca. 100 bis 200 bar, vorzugsweise 140 bis 160 bar;
Hochdruckzeit ca. 2 bis 8 Sekunden, vorzugsweise ca. 3 bis 5 Sekunden.

Weiterhin kann die Polyamidfolie mit einem oder mehreren polymeren Materialien, wie einer Formmasse, hinterspritzt werden. Dies kann insbesondere nach einer Umformung erfolgen. Alternativ können natürlich Formkörper, die aus der Formmasse erhältlich sind, und der Schichtstoff, der gegebenenfalls umformt sein kann, miteinander verklebt werden.

Der gegebenenfalls umgeformte Schichtstoff kann mit üblichen Spritzgussverfahren hinterspritzt werden. Bei den gebräuchlichen Spritzgussmaterialien, welche zum Hinterspritzen des mit einer vernetzten Farbschicht umfassenden Schichtstoffs, verwendet werden können, handelt es sich im besonderen, aber nicht ausschließlich, um Polyamide, Polyester, Polycarbonate, Polystyrole, Polystyrol-Copolymere, wie zum Beispiel ABS, Poly(N-Methylmethacrylimide) (PMMI) und/oder Polymethylmethacrylate (PMMA). Bevorzugtes Material zum Hinterspritzen sind Polyamide oder Polymethylmethacrylate.

Ferner können die Schichtstoffe vor oder nach dem Aufbringen einer Verstärkungsschicht einem oder mehreren der folgenden Verarbeitungsschritte unterworfen werden:

Umformen mit oder ohne Aufheizen der Folie; Zurechtschneiden. Die Verarbeitung der Folie ist nicht auf die genannten Verfahren beschränkt. Die Verarbeitungsverfahren können in anderer Reihenfolge als der genannten eingesetzt werden. Ebenso können Verarbeitungsschritte auch ein- oder mehrfach wiederholt werden.

Nachfolgend soll die vorliegende Erfindung anhand von Beispielen näher erläutert werden, ohne dass hierdurch eine Beschränkung erfolgen soll.

### Herstellungsbeispiele

### Herstellung der Polyamidfolie

Der Wassergehalt wurde nach Karl-Fischer bestimmt.
Die Endgruppenbestimmungen erfolgen mittels Titration.

### Herstellung der Polyamidfolien bzw. -formkörper

Die Herstellung der Polyamidfolie erfolgte durch an sich bekannte Methoden, wie beispielsweise Extrusion durch eine Breitschlitzdüse wie bei der Flachfolienextrusion, der Blasfolienextrusion oder durch Lösungsgießen.

Der Kunststoffformkörper kann gegebenenfalls durch Verkleben Extrusionsbeschichtung oder Laminieren in Folgeprozessschritten auch mehrschichtig ausgeführt werden.

Die Beispiele wurden auf einer handelsüblichen Flachfolienanlage der Fa. Collin hergestellt. Hierbei wurde das Polyamid bevorzugt in Granulatform in einen Trichter aufgegeben, von dem es in den Extruder gefördert wird. Der Extruder bestand aus einem üblicherweise metallischen Zylinder, der von außen beheizt wurde, und einer Extruderschnecke, die sich im Extruder um die eigene Achse drehte und somit das Polymere vom Einzugsbereich hinter der Trichteröffnung durch den Extruder förderte. In alternativen Ausführungsformen können auch Zwei- oder Multischneckenextruder verwendet werden. Durch die Erwärmung von außen und die Scherung des Polymeren im Extruder schmolz das Polymere auf und gelangte hinter der Spitze der Extruderschnecke in das Extrusionswerkzeug in Form der Foliendüse (oder im Allgemeinen: Breitschlitzwerkzeug). Hier wurde die Polyamidschmelze in eine flächige Form überführt und trat durch den Düsenspalt flächig aus der Foliendüse aus. Die Foliendüse kann auch aus mehreren Extrudern mit Schmelze gespeist werden, so dass dadurch mehrschichtige Folien entstehen. Anschließend wurde die Kunststoffbahn auf mindestens einer Walze abgekühlt und nachfolgend aufgewickelt.

Der für die Versuche verwendete Extruder mit geschlossenem Zylinder, zwei getrennt voneinander temperierbaren Extruderzonen und ohne Entgasungsöffnung wies einen Schneckendurchmesser von 35 mm bei einem L/D-Verhältnis (Länge der Schnecke/Durchmesser der Schnecke) von 25 auf. Verwendet wurde eine handelsübliche Dreizonenschnecke.

Für die Versuche wurden die folgenden Temperatureinstellungen an der Extrusionsanlage vorgenommen:

| | |
|---|---|
| Einzug (Zone hinter dem Trichter) | : 240°C |
| Extruderzone 1 | : 280°C |
| Extruderzone 2 | : 290°C |
| Übergangsbereich | : 290°C |
| Foliendüse | : 290°C |
| Lippentemperierung | : 350°C |

### Verfahrensvariante A - Chill-Roll-Verfahren

Die Folien wurden im Versuchsaufbau einschichtig im sogenannten Chill-Roll-Verfahren hergestellt und haben eine Dicke von 50 µm. Anschließend wurden die Folien visuell hinsichtlich ihrer Qualität bewertet. Dazu wurden die Folien optisch im Vergleich zu einem Referenzmuster in marktfähiger Qualität hinsichtlich der optischen Güte verglichen und bewertet. Unter optischer Güte sind hier u.a. die Größen Streifen, Oberflächengüte, Gelkörperanzahl, Anzahl an Verunreinigungen und Anzahl an Partikeln aus abgebautem Material zu verstehen. Dabei erhielten alle Muster, die als marktfähig angesehen wurden, die Bewertung (+). Die Muster, die knapp nicht mehr marktfähig waren, erhielten die Bewertung (o) und die Muster, die deutlich bzw. sehr deutlich nicht marktfähig waren, erhielten die Bewertungen (-) bzw. (--).

Bei Polyamid PA1 handelte es sich um Polyamide PA PACM 12 der Firma Evonik Degussa GmbH beispielsweise auf Basis der Zusammensetzung des TROGAMID^{®} CX7323. Polyamid PA2 ist ein mittelviskoses PA PACM 12.

| **Beispiel** | **Materialbezeichnung** | **Folienqualität** | **Wassergehalt nach KF** | **Aminoendgr. mmol/Kg** | **Carboxylendgr. mmol/Kg** | **Endgr.-summe** |
|---|---|---|---|---|---|---|
| 1 | PA1 | + | <0,01 | **31** | 67 | 98 |
| 2 | PA2 | + | 0,014 | **20** | 68 | 88 |
| 3 | PA1 | + | 0,024 | **20** | 88 | 108 |
| 4 | PA1 | + | <0,02 | **16** | 75 | 91 |
| 5 | PA1 | + | 0,019 | **10** | 79 | 89 |
| 6 | PA1 | + | <0,02 | **11** | 73 | 84 |
| 7 | PA1 | + | 0,02 | **21** | 69 | 90 |
| 8 | PA2 | + | 0,009 | **26** | 64 | 90 |

### Verfahrensvariante B - Glättverfahren

Eine nach obigen Extrusionsverfahren erhaltene plastifizierte Schmelze wurde zwischen zwei benachbarten Walzen (A + B), deren Walzenspalt auf 250 µm eingestellt war sowie über eine weitere, nachgeschaltete Walze (C) formgebend abgekühlt. Die Anordnung der Walzen zueinander ist in Figur 2 näher erläutert. Zur Darstellung einer besonders guten Dickenverteilung lag hierbei im Walzenspalt 1 ein, in seiner Ausprägung kleiner, über die Extrusiosnbreite homogener Schmelzevorrat (D) vor. Die Walzenanordnung des Glättwerkes entsprach hierbei der I-Konfiguration in horizontaler Lage, wobei zur Herstellung der Folie auch andere Glättwerke eingesetzt werden können. Dem Glättwerk, bestehend aus den drei Walzen A, B und C ist eine Kühlstrecke (E) nachgeschaltet, die der Folie die Restwärme entzieht.
Temperatur Walze A: 70°C
Temperatur Walze B: 80°C
Temperatur Walze C: 140°C.

Es wurde eine 250 µm Folie in besonders guter optischer Qualität und besonders guter Dickenverteilung erhalten.

### Beispiele

Eine 250 µm dicke Folie basierend auf TROGAMID^{®} CX7323, die gemäß dem obigen Verfahren in der Verfahrensvariante B nach dem Glättverfahren erhalten wurde, wurde mittels Laser für den späteren Umformprozess vorbereitet (Aufnahmelöcher für die Zentrierstifte). Die vorbereitete Folie wurde mit kommerziell von der Firma Pröll KG erhältlichen Druckfarben, die eine Isocyanat-Vernetzung ermöglichen, mit einem Siebdruckverfahren bedruckt (NoriAmid®). Die Druckfarben wurden mit einem Isocyanat-Härter (Härter 8125, erhältlich von der Firma Pröll KG) gemischt und mit einem Verdünner (SMK 090, erhältlich von der Firma Pröll KG) versetzt, um die Viskosität den Viskositätserfordernissen anzupassen. Anschließend wurde eine Haftvermittlerschicht (NoriAmid® APM, erhältlich von der Firma Pröll KG) aufgebracht.

Hierbei wurde das Dekor/Layout wie folgt realisiert:

| | |
|---|---|
| Schriftfarbe (Logos): | NoriAmid® 770 + 10% Härter 8125 +10% SMK 090 |
| Hintergrundfarbe: | NoriAmid® 952 + 10% Härter 8125 +10% SMK 090 |
| Haftvermittler: | NoriAmid® APM + 10% SMK 090 |

### Druckparameter:

Die Bedruckung erfolgte ohne Vortemperung mit einem 100-40y Gewebe.

Alle Schichten wurden direkt im Anschluss an die Bedruckung im Jet- Trockner getrocknet. Die einzelnen Zonen wurden dabei auf folgende Temperaturen eingestellt: 85°C/90°C/25°C. Die Bandgeschwindigkeit betrug 5m/min. Anschließend erfolgt die Temperung der bedruckten Folie (inkl. Haftvermittlerschicht) für 3h bei 90°C.

Die bedruckten Folien wurden im zeitlichen Abstand von mehreren Tagen über das HPF-Uerfahren auf einer SAMK 400-42 Umformanlage, kommerziell von der Firma Niebling-Junior Kunststoffverarbeitung - Werkzeugbau e.K erhältlich, zu einem Deckel umgeformt.

**Prozessparameter - Umformung:**

| | |
|---|---|
| Hochdruck (soll/ist) | 150 bar / 145 bar |
| Hochdruckzeit gesamt: | 4 s (150 bar, Rampe: 1s) |
| Heizzeit: | 8 s |
| Ober- / Unterheizung: | 280°C |
| Luftheizung: | 300°C |
| Werkzeugheizung: | 110°C |

Aus den Einstellungen resultierte eine Folientemperatur (Unterseite) von ca. 120-125°C. Die Zykluszeit lag bei 21,1s.

Nachdem der Deckel der Folienbox ausgestanzt wurde, erfolgt die Hinterspritzung der Folien-Inserts mit TROGAMID® CX 7323 und orientierend mit Makrolon® 2205.

### Prozessparameter - Hinterspritzvorgang für TROGAMID® CX 7323

Zylindertemperaturen: 310/300/290/280 °C
Spritzzeit: 0,6 sec.
Spritzdruck: 1200 bar
Nachdruck: 500 bar
Nachdruckzeit: 5 sec.
Kühlzeit: 15 sec.

| | |
|---|---|
| Werkzeugtemperaturen: | Düsenseite: 75°C, |
| | Auswerferseite: 35 °C. |

### Prozessparameter - Hinterspritzvorgang für Makrolon® 2205 Zylindertemperaturen: 290/280/275/265 °C

Spritzzeit: 0,6 sec.
Spritzdruck: 1500 bar
Nachdruck: 570 bar
Nachdruckzeit: 4 sec.
Kühlzeit: 15 sec.

| | |
|---|---|
| Werkzeugtemperaturen: | Düsenseite: 75°C, |
| | Auswerferseite: 35 °C. |

Es wurde ein Schichtstoff mit einem ausgezeichneten Eigenschaftsprofil erhalten, der sowohl hohen ästhetischen Ansprüchen genügt, als auch eine ausgezeichnete Widerstandsfähigkeit gegenüber chemischen und mechanischen Belastungen zeigte.

## Patentansprüche

1. Schichtstoff, umfassend mindestens ein thermoplastisches Substrat und mindestens eine Farbschicht, **dadurch gekennzeichnet, dass** mindestens ein thermoplastisches Substrat Polyamid umfasst und eine Dicke im Bereich von 25 µm bis 5000 µm aufweist, auf das mindestens eine Farbschicht mit einer Polyurethan-Vernetzung aufgebracht ist.

2. Schichtstoff gemäß Anspruch 1, **dadurch gekennzeichnet, dass** der Schichtstoff eine Haftvermittlerschicht aufweist, die auf der Farbschicht aufgebracht ist.

3. Schichtstoff gemäß Anspruch 1 oder 2, **dadurch gekennzeichnet, dass** der Schichtstoff eine Verstärkungsschicht aufweist, wobei die Farbschicht zwischen dem thermoplastischen Substrat und der Verstärkungsschicht vorgesehen ist.

4. Verfahren zur Herstellung eines Schichtstoffs gemäß mindestens einem der Ansprüche 1 bis 3, **dadurch gekennzeichnet, dass** ein flächiges thermoplastisches Substrat, umfassend Polyamid mit einer Dicke im Bereich von 25 µm bis 5000 µm mit einer Farbschicht versehen wird, wobei das in der Farbe vorhandene Bindemittel mit Polyisocyanaten vernetzt wird.

5. Verfahren gemäß Anspruch 4, **dadurch gekennzeichnet, dass** das Bindemittel ein Gewichtsmittel des Molekulargewichts im Bereich von 1000 bis 50000 g/mol aufweist.

6. Verfahren gemäß Anspruch 4 oder 5, **dadurch gekennzeichnet, dass** das Bindemittel eine Hydroxylzahl im Bereich von 0,1 bis 50 mg KOH/g aufweist.

7. Verfahren gemäß mindestens einem der Ansprüche 4 bis 6, **dadurch gekennzeichnet, dass** das Bindemittel eine Cellulose oder ein Cellulosederivat, ein Polyurethan, einen Polyester, ein Polycarbonat, ein Polyamid oder ein Poly(meth)acrylat umfasst.

8. Verfahren gemäß mindestens einem der Ansprüche 4 bis 7, **dadurch gekennzeichnet, dass** ein aliphatisches Polyisocyanat zur Vernetzung eingesetzt wird.

9. Verfahren gemäß mindestens einem der Ansprüche 4 bis 8, **dadurch gekennzeichnet, dass** die Farbe mittels Siebdruckverfahren auf die Polyamidfolie aufgedruckt wird.

10. Verfahren gemäß mindestens einem der Ansprüche 4 bis 9, **dadurch gekennzeichnet, dass** auf die durch das Bedrucken mit Farbe erhaltene Farbschicht eine Haftvermittlerschicht aufgebracht wird.

11. Verfahren gemäß Anspruch 10, **dadurch gekennzeichnet, dass** der Haftvermittler Cellulose oder ein Cellulosederivat, ein Polyurethan, einen Polyester, ein Polycarbonat, ein Polyamid oder ein Poly(meth)acrylat umfasst.

12. Verfahren gemäß Anspruch 10 oder 11, **dadurch gekennzeichnet, dass** der Haftvermittler mittels Siebdruckverfahren auf die Farbschicht aufgedruckt wird.

13. Verfahren gemäß mindestens einem der Ansprüche 4 bis 12, **dadurch gekennzeichnet, dass** die bedruckte Polyamidfolie umgeformt wird.

14. Verfahren gemäß mindestens einem der Ansprüche 4 bis 13, **dadurch gekennzeichnet, dass** die bedruckte Polyamidfolie mit einer Verstärkungsschicht versehen wird.

## Claims

1. Laminate comprising at least one thermoplastic substrate and at least one colour layer, **characterized in that** at least one thermoplastic substrate comprises polyamide and has a thickness in the range from 25 µm to 5000 µm, and at least one colour layer comprising polyurethane crosslinking has been applied thereto.

2. Laminate according to Claim 1, **characterized in that** the laminate has an adhesion promoter layer which has been applied to the colour layer.

3. Laminate according to Claim 1 or 2, **characterized in that** the laminate has a reinforcement layer, the colour layer having been provided between the thermoplastic substrate and the reinforcement layer.

4. Process for producing a laminate according to at least one of Claims 1 to 3, **characterized in that** a flat thermoplastic substrate comprising polyamide having a thickness in the range from 25 µm to 5000 µm is provided with a colour layer, by crosslinking the binder present in the colour with polyisocyanates.

5. Process according to Claim 4, **characterized in that** the binder has a weight-average molecular weight in the range from 1000 to 50 000 g/mol.

6. Process according to Claim 4 or 5, **characterized in that** the binder has a hydroxyl number in the range from 0.1 to 50 mg KOH/g.

7. Process according to at least one of Claims 4 to 6, **characterized in that** the binder comprises a cellulose or a cellulose derivative, a polyurethane, a polyester, a polycarbonate, a polyamide or a poly(meth)acrylate.

8. Process according to at least one of Claims 4 to 7, **characterized in that** an aliphatic polyisocyanate is used for crosslinking.

9. Process according to at least one of Claims 4 to 8, **characterized in that** the colour is printed onto the polyamide film by means of screen printing processes.

10. Process according to at least one of Claims 4 to 9, **characterized in that** an adhesion promoter layer is applied to the colour layer obtained by the printing with colour.

11. Process according to Claim 10, **characterized in that** the adhesion promoter comprises cellulose or a cellulose derivative, a polyurethane, a polyester, a polycarbonate, a polyamide or a poly(meth)acrylate.

12. Process according to Claim 10 or 11, **characterized in that** the adhesion promoter is printed onto the colour layer by means of screen printing processes.

13. Process according to at least one of Claims 4 to 12, **characterized in that** the printed polyamide film is reformed.

14. Process according to at least one of Claims 4 to 13, **characterized in that** the printed polyamide film is provided with a reinforcement layer.

## Revendications

1. Stratifié, comprenant au moins un substrat thermoplastique et au moins une couche colorée, **caractérisé en ce qu'**au moins un substrat thermoplastique comprend du polyamide et présente une épaisseur dans la plage de 25 µm à 5000 µm, sur lequel est appliquée au moins une couche colorée présentant une réticulation de type polyuréthane.

2. Stratifié selon la revendication 1, **caractérisé en ce que** le stratifié présente une couche de promoteur d'adhérence qui est appliquée sur la couche colorée.

3. Stratifié selon la revendication 1 ou 2, **caractérisé en ce que** le stratifié présente une couche de renforcement, la couche colorée étant prévue entre le substrat thermoplastique et la couche de renforcement.

4. Procédé pour la préparation d'un stratifié selon au moins l'une quelconque des revendications 1 à 3, **caractérisé en ce qu'**un substrat thermoplastique plan, comprenant un polyamide présentant une épaisseur dans la plage de 25 µm à 5000 µm est pourvu d'une couche colorée, le liant présent dans la couleur étant réticulé par des polyisocyanates.

5. Procédé selon la revendication 4, **caractérisé en ce que** le liant présente une moyenne pondérale du poids moléculaire dans la plage de 1000 g/mole à 50 000 g/mole.

6. Procédé selon la revendication 4 ou 5, **caractérisé en ce que** le liant présente un indice d'hydroxyle de 0,1 à 50 mg de KOH/g.

7. Procédé selon au moins l'une quelconque des revendications 4 à 6, **caractérisé en ce que** le liant comprend de la cellulose ou un dérivé de cellulose, un polyuréthane, un polyester, un polycarbonate, un polyamide ou un poly(méth)acrylate.

8. Procédé selon au moins l'une quelconque des revendications 4 à 7, **caractérisé en ce qu'**on utilise un polyisocyanate aliphatique pour la réticulation.

9. Procédé selon au moins l'une quelconque des revendications 4 à 8, **caractérisé en ce que** la couleur est imprimée au moyen d'un procédé de sérigraphie sur la feuille de polyamide.

10. Procédé selon au moins l'une quelconque des revendications 4 à 9, **caractérisé en ce qu'**une couche de promoteur d'adhérence est appliquée sur la couche colorée obtenue par l'impression par la couleur.

11. Procédé selon la revendication 10, **caractérisé en ce que** le promoteur d'adhérence comprend de la cellulose ou un dérivé de cellulose, un polyuréthane, un polyester, un polycarbonate, un polyamide ou un poly(méth)acrylate.

12. Procédé selon la revendication 10 ou 11, **caractérisé en ce que** le promoteur d'adhérence est imprimé au moyen d'un procédé de sérigraphie sur la couche colorée.

13. Procédé selon au moins l'une quelconque des revendications 4 à 12, **caractérisé en ce que** la feuille de polyamide imprimée est transformée.

14. Procédé selon au moins l'une quelconque des revendications 4 à 13, **caractérisé en ce que** la feuille de polyamide imprimée est pourvue d'une couche de renforcement.
